# EUROPEAN PATENT SPECIFICATION

(11) **EP 2 391 224 B1**
(45) Date of publication and mention of the grant of the patent: **13.02.2013**
(21) Application number: 10717227.2
(22) Date of filing: 11.03.2010
(51) Int. Cl.: A23G 9/32

(54) **METHOD FOR THE PREPARATION OF ICE CREAM**
VERFAHREN ZUR HERSTELLUNG VON SPEISEEIS
PROCÉDÉ DE PRÉPARATION DE CRÈME GLACÉE

(30) Priority: 13.03.2009 BE 200900152
(43) Date of publication of application: 07.12.2011
(73) Proprietor: Lotus Bakeries, 9971 Lembeke (BE)
(72) Inventor: VANDER STICHELE, Jan, B-9830 Sint-Martens-Latem (BE)
(74) Representative: Caers, Raphael Frans Ivo
(86) International application number: PCT/IB2010/051060
(87) International publication number: WO 2010/103483

(56) References cited:
- EP-A1- 1 302 112
- EP-A1- 1 719 413
- EP-A1- 1 806 055
- WO-A1-01/03523
- WO-A2-02/43505
- JP-A- 2003 310 165
- US-A1- 2004 265 472

## Description

This invention relates to a cookie ice cream comprising an ice cream preparation which is at least partially covered with a topping as described in the preamble of the first claim. The invention also relates to the topping used. Also, this invention relates to a method for the preparation of a cookie ice cream and of the topping.

In the field of composite ice cream compositions several embodiments are known. It is for example known to combine one of more layers of ice or ice cream with cake, a cookie, a crispy waffle or a horn. It is also known to for example fill a cigar-shaped cookie with ice cream. To prevent the cookie from losing its crispiness during preservation or consumption, by contact with the water present in the ice cream, the surface of the cookie that is contacted with the ice cream is usually coated with a fat, chocolate or a chocolate containing coating. However, from an organoleptic point of view, the fat coating is usually experienced by the consumer as unpleasant because the coating fat usually does not melt together with the ice cream. Furthermore it is almost impossible to avoid all contact of the cookie with water and the cookie may lose its crispiness after all.

GB 2263615 describes a bar-shaped ice cream product that gives high texture contrasts during consumption. On opposite sides of a layer of ice cream there is respectively a layer with a thick consistency and on the other hand one or more layers of a crispy material which, before it is contacted with the ice cream, has been covered with a water-repellent coating, for example couverture. Between consecutive crispy layers there is preferably added fudge, caramel or sugar paste. Adhesion of the different layers is achieved by covering each layer with a molten couverture and pressing consecutive layers onto each other with the couverture in the molten condition.

From FR 2680635 it is known to produce a crispy cookie material by heating an emulsion of chocolate dispersed in sugar and mixing it with baked cookie, after which the paste is cooled down and brought into a shape. The thus formed cups are considered suitable for taking up ice cream.

From US 3508926 it is known to incorporate ground or pulverised cookies into ice cream. To prevent the loss of the crispy character of the crumbs, the crushed cookies are mixed with a mixture of a shortening and an emulsifier, moistened with a sugar syrup and dried. The thus obtained crunch is suitable for use as crispy inclusions into ice cream.

US 2004/0265472 describes that just before the filling and sealing of a packaging, inclusions chosen from a long list including crumbs and or cookies, possibly provided with a coating, may be added to a layer of low A_{w} ice cream topping, and this at a temperature which possibly needs to be adjusted with the intention of maintaining the crispy nature of the inclusion. There is no example wherein inclusions are added. The fats used in the example are Durkex 500 or hydrogenated vegetable fats, each being hardened fats.

WO 02/43505 describes the preparation of a biscuit mass that is homogeneous and pumpable at 20°C, by mixing crumbs of crumbled shortbread in a partially hydrogenated vegetable fat (Durkex 500). Also in this case the crumbliness of the crumbs is maintained and hardened fats are used.

EP 1806055 A1 describes a spread mainly comprising ground spiced biscuits and a fatty substance. The ground spiced biscuits are used as grains and there is no further explanation about the nature of the fatty substance used.

From EP 1302112 a composite product is known consisting of layers of ice cream, sorbet or yoghurt ice combined with layers of a biscuit-like mass that has the appearance of a biscuit at temperatures of -10 °C and below. The mass maintains its biscuit-like consistency during preservation and consumption. The mass which is liquid and pumpable at 15°C contains 20-60 % wt. of baked biscuit particles, characterized as crumbs, which are homogenously distributed over 40-80 % wt. fat. In the examples, always hard fats are used, in order to eventually be able to form a crispy coating onto the preformed ice cream object. The mass may further comprise 5-50 % wt. of one or more additional ingredients, such as chocolate, nut paste or fats based on cacao butter or cacao butter equivalents. Up to 25% wt. of the biscuit mass may consist of biscuit crumbs, meringue, cereals, fruit, etc. with a diameter of 1-5 mm. Between the layers of biscuit and ice cream, thin layers of a fat based crunchy material may be applied, for example chocolate or a coating or chocolate coated waffles. An example of an end product is a horn filled with ice cream onto which a sandwich is placed of ice cream between two layers of biscuit.

EP 1283012 describes a reconstituted biscuit product which is prepared by mixing a mixture of molten fat and sugar with biscuit particles having a size of 1-3 mm and cooling it to below the melting point of the fat. This mixture is subsequently mixed with a syrup based on sugar, water, a fat which is solid at room temperature and an emulsifier, so that a coating of the biscuit particles with the syrup is obtained. The syrup functions as a binder. To improve the crispiness, the water may be evaporated.

EP 664676 describes an ice cream product wherein a non-baked cookie dough is co-extruded with an ice cream composition in semi-frozen condition.

From EP 1719413 a solid biscuit product is known which is obtained by compacting 50-85% wt. of a mixture of grains of baked cookies or cereals possibly mixed with nuts, which are coated with 15-40% wt. of a fat of the cacao butter equivalent type, which are part of the family of the hard fats, into for example a cup, a horn or a coating that maintains its shape by the solidification of the hard fat. The grains typically have a diameter between 0.5 and 10 mm. The shape may be provided with a coating, for example a chocolate coating, to improve its water repellent properties, before being filled with ice cream, sorbet or yoghurt ice.

WO 01/03523 A1, as well as US 6,017,571 describes the preparation of food products having a water content of less than 5% wt. and thereby thus resistant against microbial degeneration, and in which a component such as cheese, fruit, spices, and where appropriate also cookie material is incorporated, and wherein that component finally ends up with a particle size of 15-31 µm. The solid ingredients in these descriptions are soaked with molten fat, after which the particles are refined in two steps, first with a two-roll pre-refiner to on average less than 229 µm, and a five-roll refiner to on average 15-31 µm. The fats used in these preparations are hard fats, or substantially hard fats where several fats are processed together, and the products therefore have a dry consistency during the refinement steps. The final products in which ground cookies are incorporated are used as coating for ice cream or frozen desserts which means that they are solid at consumption temperature.

JP3608201 also describes the preparation of chocolate-like products having a low moisture content whereby two refinement steps are used: a first step to less than 250 µm; the product thereof is then mixed with fats at 40-50 °C, and this mixture is further processed, according to the method of chocolate processing, to a powder having a particle size of 10-50 µm, which again may be mixed with more fatty substance. The final products are as such poured into a shape or used as coating. The dry refinement step, and to obtain a chocolate-like product with the correct characteristics for the final shaping, both require that solid fats are used, such as retrieved in the examples.

It is known to prepare a spiced biscuit ice cream by mixing crumbled spiced cookies with warm milk until the spiced cookies are dissolved. The thus obtained mixture is mixed with egg yolk and sugar and cooled down to ice cream. With this preparation it is however achieved that the spiced cookies are integrated into the ice phase and forms a substantially homogeneous phase therewith. However, the quantity of spiced cookies that can be incorporated in the ice cream is limited, which causes the spice cookie taste to be experienced by the consumer as insufficiently distinct.

The known products either lead to an insufficiently strong taste experience of cookies, or to a crispiness which may be suitable for chocolate or chocolate-like products, but which is unsuitable when the consumer expects a smooth product with a strong cookie experience. Other known products lead to a crumbliness that is too strong to be appreciated by many consumers.

There is thus a need for a cookie containing ice cream, of which the cookie taste is more pronounced, and which offers the appropriate organoleptic characteristics at the normal consumption temperature of ice cream.

More specifically there is a need for a spiced cookie ice cream with a spiced cookie taste that is prominently present and of which the components are experienced as smooth and creamy, and melting together in the mouth without being experienced as waxy.

The goal of the present invention is therefore to provide a cookie ice cream that shows a pronounced taste of the cookies incorporated into the ice cream, with the right organoleptic characteristics.

This is achieved according to this invention with a cookie ice cream showing the technical features of the first claim.

For this purpose, the cookie ice cream is characterized in that a topping is obtained by:
a) dry grinding of a quantity of cookies having a water content below 5 % wt. with respect to the weight of the cookies, preferably lower than 3 % wt., more preferably lower than 1 % wt.,
b) mixing of the ground cookies with a quantity of at least one fat, at a temperature of 40-75 °C for the formation of a fat based suspension, wherein further a quantity of additional ingredients may be added if desired,
c) further refining of the particle size of the solid particles until at least 80 % wt. of the particles has an average particle size smaller than 30 µm, and at least 99 % wt. of the particles has an average particle size smaller than 100 µm,
d) cooling of the thus obtained suspension,
whereby the obtained topping has a solid fat content at 20°C of less than 5 % wt.

The prescribed small average particle size and the nature of the fat used, more specifically the low solid fat content of the topping, together provide a smooth mouth feeling during consumption of the cookie ice cream according to the present invention. It is surprising how this may be achieved at the low temperatures at which ice cream usually is consumed. The topping is in this manner experienced as being free of any granularity, crumbliness or crispiness, at the consumption temperature of approximately -12 °C, neither coming from the cookie particles or from an optionally present other solid additional ingredient, nor coming from any noteworthy presence of fat crystals of the fat component, and thereby gives a smooth and creamy impression, as well as the impression of melting in the mouth simultaneously with the ice cream composition that is spooned up together with it. By its high content of very small cookie particles, also the cookie taste is very pronounced. The combination of the strong cookie taste and the appropriate organoleptic characteristics of the topping, in harmony with the ice cream composition, provide a taste sensation that was previously unknown.

The quantity of water in the cookies is preferably kept as low as possible to support the smoothness and the creaminess of the topping, to obtain a mass that is easy to process and to minimize the risk for the formation of ice crystals in the topping. This is especially important with storage of the ice cream at the conventional freezer temperature, because the formation of ice crystals in the product strongly deteriorates the taste. Therefore the water content of the ground cookies in step a is preferably lower than 1 % wt. with respect to the weight of the cookies, most preferably the cookies are substantially free of water. A low water content in the cookies may be achieved in various ways, for example by subjecting the cookies after baking to a drying process or by prolonging the baking time of the cookies until almost all water has been baked out and the cookies have reached the desired moisture content. The person skilled in the art understands that it is also preferred to incorporate the cookies as soon as possible after the baking or drying process to minimize the risk for water absorption from the environment.

The topping preferably has a water content of maximum 3 % wt., preferably maximum 1 % wt. The applicants have further found that a low water content of the cookies and of the topping derived from them is favorable for having a low viscosity during the further refining step c, as a result of which this step can be more efficient and more effective. The applicants have further found that a low water content is advantageous for the taste of the topping, because more water appears to influence the taste of the topping in an unfavorable manner, more specifically because the cookies taste becomes less pronounced, which strongly reduces the targeted taste sensation which has been described above.

Preferably the particles derived from the cookies which are present in the topping, have a particles size such that at least 80 % wt. of the particles has an average particle size smaller than 30 µm, and at least 99 % wt. of the particles has an average particle size smaller than 100 µm. This offers the possibility to obtain a homogeneous topping which contains substantially no noticeable grains and which shows a clearly noticeable cookie taste.

The topping is preferably smooth when it is consumed at the usual consumption temperatures around -5 to -15°C, often around -10°C or -12°C and therefore preferably comprises 35-70 % wt. of fat, more preferably 40-60 % wt., more preferably 50-55 % wt. At such a fat content, the cookie taste is optimally supported.

The fat that is ground with the cookies is preferably an oil which is liquid at room temperature. It is preferred to keep the solid fat content in the fat component as low as possible, in order to achieve that the topping is smooth at the conventional consumption temperature, melts in the mouth as completely as is possible, preferably simultaneously with the fats present in the ice cream and doesn't leave a waxy feeling in the mouth, as well as shows a minimal risk to oiling during consumption and storage. When selecting the oil, preferably also taken into account is the targeted consistency during storage at the conventional storage temperature below 20°C, which may be solid or creamy, but preferably is solid. To achieve this, the fat added to the topping is preferably only liquid oil, more preferably vegetable oil chosen from the group of palm oil, rapeseed oil, grain oil, soy bean oil, maize oil, sunflower oil, cotton-seed oil, safflower oil, sesame oil, nut oil, olive oil, liquid fractions of palm oil or a mixture of two or more of these oils. Each of these oils has its own chemical and physicochemical characteristics which determine its melting behaviour in function of temperature.

When choosing the nature of the oil and the quantity of added oil, the fat present in the cookies also has to be taken into account, because during the mixture of the ground cookies with the oil, at least partial migration occurs of the fats present in the cookies into the liquid oil. Therefore the quantity of added oil is 25-60 % wt., preferably 30-50 % wt., more preferably 40-45 % wt. with respect to the weight of the topping.

The topping preferably has a solid fat content at 20 °C of between 0.5 and 5, preferably between 1 and 3 % wt. with respect to the total quantity of fat present in the topping. The topping will usually comprise no, preferably less than 0.5 % wt. of S3 triglycerides with respect to the total weight of the topping. With S is meant saturated fatty acids with 14-18 C atoms. Such a topping shows some structure but is sufficiently liquid to be experienced as saucy at the consumption temperature, melts away during consumption together with fats possibly present in the ice cream, as a result of which the risk for the observation of a waxy feeling is minimum.

To obtain an optimum cookie taste, the topping may typically comprise at least 25 % wt. of cookies, preferably at least 30 % wt., more preferably at least 40 % wt., most preferably at least 50 % wt., and usually less than 60 % wt. Specific preference is given to a spiced cookie as the cookie.

The cookies used in this invention may typically comprise at least 5, often more than 10 or more than 15 % wt. of fat and usually at most 25 % wt., often less than 20 % wt.. Cookies, with different fat content however,, lower or higher, may also be used, as long as the total fat content and the nature of the fat, especially the solid fat content in the topping is controlled as described herein above.

This invention also relates to a method for the preparation of the above described topping and the above described cookie ice that is at least partially covered with such a topping.

According to this method, a topping is prepared by:
a) dry grinding of a quantity of cookies having a water content below 5 % wt. with respect to the weight of the cookies, preferably lower than 3 % wt., more preferably lower than 1 % wt.,
b) mixing of the ground cookies with a quantity of at least one fat, at a temperature of 40-75 °C for the formation of a fat based suspension, wherein further a quantity of additional ingredients may be added as desired,
c) further refining of the particle size of the solid particles until at least 80 % wt. of the particles has an average particle size smaller than 30 µm, and at least 99 % wt. of the particles has an average particle size smaller than 100 µm,
d) cooling of the thus obtained suspension,
wherein the obtained topping has a solid fat content at 20°C of less than 3 %wt.

The particles obtained in step a are preferably refined until at least 75 % wt. of the particles have a particle size smaller than 1000 µm, preferably 90 % wt. of the particles. Preferably the particles obtained in step c are refined until at least 80 % wt. of the particles has an average particle size smaller than 30 µm, and at least 99 % wt. of the particles have an average particles size smaller than 100 µm. Obtaining a fine particle size in step a allows the grains to be picked up during the further grinding in step c, and allows to obtain a smooth topping. The finer the grinding is in step a, the shorter the duration of step c may be. The particle size is preferably determined using a MasterSizer S long bed ver. 2.19 of the firm Malvern, which is based on laser diffraction.

The quantity of cookies that are added in step a is preferably at least 25 % wt. with respect to the total weight of the topping, preferably at least 30 % wt., more preferably at least 40 % wt., most preferably 50-65 % wt.

The mixing of the ground cookies with fat in step b is preferably not performed at room temperature, but at a slightly elevated temperature, preferably between 40 and 75 °C, more preferably between 40 and 70 °C, to promote the release of fat from the cookies and an optimum mixing with the added fat. At the selected temperatures, the fat is at least partially molten, and thus shows a better mobility, which improves the mixing with the other ingredients. The improved homogeneity improves the structure and the mouth feeling and decreases the risk for a waxy feeling during the eating of the topping.

The quantity of fat that is added in step b is determined such that the topping comprises 35-70 % wt., preferably 40-60 % wt., more preferably 50-60 % wt of fat.

The size reduction process in step c may be performed using every technique considered suitable by the person skilled in the art, for example with a ball mill or a rolling mill. The particles are reduced to a particle size wherein at least 80 % wt. of the particles has an average particle size smaller than 30 µm, and at least 99 % wt. of the particles has an average particle size smaller than 100 µm.

In step d the mixture obtained from step c is left to cool or is cooled, in order to crystallize the fat and to form a network of fat crystals wherein the other particles become trapped. The presence of such a fixating network of the fatty phase ensures the homogeneity of the topping in the long term, also at low temperatures, and counteracts any sedimentation of the other ingredients present in the topping.

If desired, an amount of additional ingredients may be added to the mixture derived from step b, between step b and c, with the purpose to control the taste, the mouth feeling and the structure of the topping. Examples of possible additional ingredients are one or more dry components chosen from the group of sugar, candy sugar, sugar replacement, emulsifiers, anti-oxidants, cacao powder, milk powder, functional ingredients, such as for example calcium containing compounds and materials that cause a crispy effect, such as for example cookie grains, chocolate grains, coffee grains, ground nuts, etc. Although a reduction of the particle size of the additional ingredients in an additional step may be contemplated, the particle size of the additional ingredients is preferably adjusted such that it is smaller than 1500 µm, preferably smaller than 1000 µm to simplify their mixing with the topping.

To the mixture obtained in step b, preferably a quantity of at least one emulsifier is added to minimize the risk for oiling. Every emulsifier considered suitable by the person skilled in the art may be used, such as for example lecithin, but also distilled unsaturated monoglycerides and trisaturated triglycerides or a mixture which comprises two or more of these substances, may be used, although the use of trisaturated triglycerides is preferably minimized because of their high solid fat content at the low temperature at which ice cream is consumed. The quantity of added lecithin is usually 0.2-2.5 % wt. with respect to the total weight of the topping, the quantity of added unsaturated monoglycerides is usually 0.1-1 % wt., the quantity of added saturated triglycerides is usually 0.1-1 % wt. If a fat based emulsifier is used, the emulsifier obviously adds to the fat content of the topping.

The invention also relates to the above described topping and the topping obtained by the above described method.

For enhancing the taste, to the cookie ice cream according to the present invention, 1-25 % wt. with respect to the weight of the ice cream preparation of crushed cookies may be added to the ice cream preparation, preferably 2-15 % wt. Because the crushed cookies are able to absorb water, they may try to form one phase with the ice cream preparation upon mixing. While cooling down of the preparation to become ice cream, they are to a large extent, often fully integrated into the ice cream. In order to maintain the experience of cookie crumbs, we prefer to also use cookie crumbs that are coated. Within the scope of this invention the refined cookies which are integrated into the ice cream may be of the same origin as the coated cookie crumbs, or they may be of a different origin. An optimum taste improvement is however obtained if the refined cookies integrated in the ice cream are of the same origin as the coated cookie crumbs. Preferably spiced cookies are used for the cookies integrated in the ice cream as well as for the coated cookie crumbs.

The crushed cookies intended for integration into the ice cream preparation will usually have a particle size that is such that at least 75 % wt. has a particle size smaller than 1000 µm, preferably smaller than 500 µm, more preferably smaller than 100 µm, so that an optimal integration into the ice cream is possible without having to apply overly extended mixing- and stirring times.

The ice cream preparation of the cookie ice cream of this invention preferably further comprises a quantity of cookie pieces or crumbs which are coated with at least one layer of a fat based coating, wherein the weight of the coating is preferably 2-10 % wt. with respect to the total weight of the coated cookie crumbs.

Preferred is a coating which comprises 40-60 % wt. of fat and 40-60 % wt. of solid sugar, because of the crispy effect which is provided by the presence of sugar and the homogeneity with which a fluid coating may be applied.

The invention further relates to a method for the preparation of the topping as is described here above.

The invention further also relates to a method for the preparation of a cookie ice cream wherein the ice cream preparation is at least partially covered with the topping.

The invention further relates to a method for the preparation of a cookie ice cream, wherein a quantity of an ice cream preparation, before the preparation of the cookie ice cream, is mixed with a quantity of cookie pieces or crumbs, characterized in that cookie pieces or crumbs are coated with at least one layer of a fat based liquid coating, after which the coated cookie crumbs or pieces are mixed with the ice cream preparation which has a maximum temperature of 7.5°C, after which the mixture is further cooled down to the desired temperature.

Although the dimensions of the cookie pieces may vary between wide limits, the coated cookie pieces may usually have a mean particle size of 0.05-10 mm, preferably 0.05-5 mm, more preferably 0.05-3 mm and be coated with at least one layer of a fat based liquid coating. This offers a pronounced perception as a grain and a substantial taste effect, even with a small quantity of cookie pieces in the ice cream preparation.

The coating may be applied onto the cookie pieces or crumbs as one thick layer or as a multitude of consecutive layers of coating. The latter is preferred because the homogeneity of the coating and the homogeneity of the distribution of the coating over the pieces is promoted and thus the barrier characteristics. This may especially be of importance if the cookie pieces have a rough surface and have an irregular shape. The presence of the coating has the effect that the cookie grains maintain their crispy character at the temperatures at which ice cream is usually stored, normally between -20 and 25 °C, also after they have been mixed with ice cream and possibly come in contact with moisture. Moisture will usually originate from the installation in which the ice cream is preserved.

The cookie pieces are, after having been coated, mixed with the ice cream preparation which has a maximum temperature of 7.5 °C, after which the mixture is further cooled down to the desired temperature. Mixing with the ice cream preparation is preferably carried out at maximum 5 °C to minimize the risk that migration of the coating to the ice cream preparation would occur and that the water barrier characteristics of the coating would be adversely influenced.

The coating preferably comprises a cacao butter replacement fat, more specifically a lauric fat. Lauric fats combine a steep N-profile with a rapid crystallization upon cooling, they show a good resistance against oxidation and a good melting behavior in de mouth, certainly in the case of the temperatures used for ice cream. Such fats are solid at the storage temperature of ice cream and therefore function as a moisture barrier, which minimizes the risk for intrusion of moisture into the cookie grains, but they fully melt in the mouth. Examples of suitable lauric fats are palm kernel oil or coconut oil, fractions thereof or mixtures of two or more of the above mentioned fats. If so desired, use can be made of an at least partially hydrogenated fat to control the melting behavior in function of the temperature. Preferably use is made of a completely or nearly completely hydrogenated palm kernel oil. Examples of other suitable fats for use in the coating are soy bean oil, fractionated palm oil, partially fractionated milk fat and mixtures of such fats.

Because during coating of the grains there is a risk that a part of the fat present in the cookies is released, the coating fat is preferably chosen so that it also shows a good compatibility with the fat present in the cookies.

An optimum water barrier is provided if the coated cookie pieces or crumbs contain 40-60 % wt. of cookie and 40-60 % wt. of coating. An optimally crispy or crunchy effect can be obtained if the cookie pieces have a water content which is lower than 3 % wt. with respect to the weight of the cookies, preferably lower than 1 % wt. At a higher water content it can be advised to dry the cookies before applying the coating.

Applying the coating can be done in various ways known by the person skilled in the art, for example by submerging the cookie pieces in the mixture of the coating, followed by mixing and separation of the coated cookie pieces, by spraying or atomizing of the coating mixture onto the cookie pieces or in any other known manner.

The quantity of fat coated cookies in the cookie ice cream can vary within wide limits, but may usually be 2-35 % wt. with respect to the total weight of the ice cream preparation, preferably 2-25 % wt., more preferably 2-20 % wt. depending on the envisaged taste effect. The ice cream preparation may usually contain 65-98 % wt., preferably 75-98 % wt. of ice cream mixture.

According to this invention any type of baked, preferably crispy cookie can be used for the preparation of the cookie pieces. The person skilled in the art is capable of adjusting the taste of the cookie to the envisaged taste of the preparation. The taste of the cookie can be analogous to this of the ice cream, or can be complementary therewith. If so desired, mixtures of two or more cookies can be used. Preferably however spiced biscuits are used.

If so desired other crumbly materials can be added to the phase comprising the cookie parts, for example materials having a particle size between 1 and 5 mm, for example meringue, nuts, candy, fruit, chocolate. Depending on the degree in which the taste effect by these materials on the ice cream is envisaged, they may be present in a concentration that varies from 0.5-25 % wt. with respect to the weight of the coated cookie pieces.

With ice cream is in the context of this invention meant any ice cream known by the person skilled in the art, for example cream ice cream, milk ice cream, sorbet, yoghurt ice etc. Preferably however milk ice cream or cream ice cream are used because of its higher fat content and lower water content although usually a reasonable amount of water will be present. Milk ice cream and cream ice cream usually show a better compatibility with the fat coated cookies and better unite from an organoleptic point of view.

Within the scope of this invention the cookies for the different phases of the ice cream preparation, more specifically the cookies for the crispy cookie grains, the cookies that are incorporated in the ice cream mixture and in the cookies processed in the topping, can always be the same cookies. If so desired the cookies for the different phases can however also be different cookies, depending of the envisaged taste effect.

The invention is now further illustrated with the following example.

### EXAMPLE

A quantity of spiced cookies having a water content of approximately 0.8 % wt. was dry ground until at least 90 % wt. of the particles had a particle size smaller than 1000 µm. The ground cookies were mixed with ground sugar and rape seed oil, and with monoglycerides and lecithin as emulsifiers, in the weight ratio according to table 1, and this at a temperature of 45 °C.

| Table 1 | |
|---|---|
| Component | % wt. |
| Grinded cookies | 52.5 |
| Grinded sugar | 6.0 |
| Rape oil | 41.0 |
| Monoglycerides | 0.2 |
| Lecithin | 0.3 |

The suspension of cookie parts and sugar in the rape seed oil, obtained after the mixing, was further processed in a ball mill until the solid particles were further reduced until at least 80 % wt. of the particles had an average particle size smaller than 30 µm and at least 90 % wt. of the particles hads an average particle size smaller than 100 µm. The particle size was measured each time with the help of laser diffraction and using a MasterSizer S long bed ver. 2.19 of the firm Malvern. The thus obtained suspension was cooled down to a temperature of 25 °C. The thus obtained topping contained 51.0 % wt. of total fat content, of which the solid fat content at 20 °C was 2 % wt., with respect to the total fat content.

In parallel a quantity of spiced cookie ice cream preparation was made by mixing, at a temperature of 7.5 °C, and in the given ratio, 41.5 g of spiced cookie ice cream, wherein already 2.1 g of spiced cookie powder had been incorporated, with 3.5 g of coated spiced cookie crunch having an average particle size of approximately 1.5 mm. The coating of the spiced cookie crunch contained a cacao butter replacement fat of lauric nature.

The spiced cookie ice cream preparation and the topping were co-extruded in parallel with each other, each time through multiple and separate nozzles into 900 ml plastic containers, in a ratio of 45 ice cream preparation to 10 topping, and such that the two components formed areas that were clearly distinguishable visually and the ice cream preparation was thus partially covered with topping. The entire assembly was further finished by dusting a quantity of 0.5 g spiced cookie powder onto it. The obtained containers with cookie ice cream were then cooled and stored at a temperature of -20 °C.

After storage during 2 weeks, the cookie ice cream was removed from the cooling and tasted by a taste panel after 10 minutes. At that moment the temperature of the ice cream was -12 °C. The topping itself gave a strong cookie sensation and was fully smooth and creamy while the coated cookie parts in the ice cream composition gave a crispy feeling. The topping and the ice cream were experienced as simultaneously melting in the mouth, and a waxy feeling was fully absent.

## Claims

1. A cookie ice cream comprising an ice cream preparation which is at least partially covered with a topping, **characterized in that** the topping is obtained by:
a) dry grinding of a quantity of cookies having a water content below 5 % wt. with respect to the weight of the cookies, preferably lower than 3 % wt., more preferably lower than 1 % wt.,
b) mixing of the ground cookies with a quantity of at least one fat, at a temperature of 40-75 °C for the formation of a fat based suspension, wherein further a quantity of additional ingredients may be added if desired,
c) further refining of the particle size of the solid particles until at least 80 % wt. of the particles has an average particle size smaller than 30 µm, and at least 99 % wt. of the particles has an average particle size smaller than 100 µm,
d) cooling of the thus obtained suspension,
wherein the obtained topping has a solid fat content at 20°C of less than 5%wt.

2. The cookie ice cream according to claim 1, **characterized in that** the topping has a water content of maximally 3 % wt., preferably maximally 1 % wt.

3. The cookie ice cream according to claim 1 or 2, **characterized in that** the topping comprises 35-70 % wt. of fat, preferably 40-60 % wt., more preferably 50-55 % wt.

4. The cookie ice cream according to any one of claims 1-3, **characterized in that** the fat is a liquid oil selected from the group of palm oil, rape seed oil, grain oil, soy bean oil, maize oil, sunflower oil, cotton-seed oil, safflower oil, sesame oil, nut oil, olive oil, liquid fractions of palm oil or a mixture of two or more of these oils.

5. The cookie ice cream according to any one of claims 1-4, **characterized in that** the topping has a solid fat content at 20 °C of more than 0.5 % wt., preferably between 1 and 3 % wt.

6. The cookie ice cream according to any of claims 1-5, **characterized in that** the topping comprises at least 25 % wt. of cookies, preferably at least 30 % wt., more preferably at least 40 % wt., most preferably at least 50 % wt.

7. The cookie ice cream according to any one of claims 1-6, **characterized in that** the ice cream preparation further comprises a quantity of crushed cookies.

8. The cookie ice cream according to claim 7, **characterized in that** the quantity of crushed cookies in the ice cream preparation is 1-25 % wt. with respect to the weight of the ice cream preparation, preferably 2-15 % wt.

9. The cookie ice cream according to any one of claims 7 or 8, **characterized in that** the ice cream preparation further comprises 2-20 % wt. of cookie pieces coated with at least one layer of a fat based coating, preferably 2-10 % wt.

10. The cookie ice cream according to claim 9, **characterized in that** the coating further comprises 40-60 % wt. of solid sugar with respect to the weight of the coating.

11. The cookie ice cream according to claim 10, **characterized in that** the coating comprises 40-60 % wt. of a hydrogenated lauric acid, preferably hydrogenated palm kernel oil.

12. A method for the preparation of the cookie ice cream according to any one of claims 1-11 wherein the ice cream composition is at least partially covered with the topping.

13. The method according to claim 12 wherein the topping is obtained by
a) dry grinding of a quantity of cookies having a water content below 5 % wt. with respect to the weight of the cookies, preferably lower than 3 % wt., more preferably lower than 1 % wt.,
b) mixing of the ground cookies with a quantity of at least one fat, at a temperature of 40-75 °C for the formation of a fat based suspension, wherein further a quantity of additional ingredients may be added if desired,
c) further refining of the particle size of the solid particles until at least 80 % wt. of the particles has an average particle size smaller than 30 µm, and at least 99 % wt. of the particles has an average particle size smaller than 100 µm,
d) cooling of the thus obtained suspension,
wherein the obtained topping has a solid fat content at 20°C of less than 5 % wt.

14. A topping which is obtained by:
a) dry grinding of a quantity of cookies having a water content below 5 % wt. with respect to the weight of the cookies, preferably lower than 3 % wt., more preferably lower than 1 % wt.,
b) mixing of the ground cookies with a quantity of at least one fat, at a temperature of 40-75 °C for the formation of a fat based suspension, wherein further a quantity of additional ingredients may be added if desired,
c) further refining of the particle size of the solid particles until at least 80 % wt. of the particles has an average particle size smaller than 30 µm, and at least 99 % wt. of the particles has an average particle size smaller than 100 µm,
d) cooling of the thus obtained suspension,
wherein the obtained topping has a solid fat content at 20°C of less than 3 % wt.

15. The topping according to claim 14, **characterized in that** the fat is a liquid oil selected from the group consisting of palm oil, rapeseed oil, grain oil, soy bean oil, maize oil, sunflower oil, cotton-seed oil, safflower oil, sesame oil, nut oil, olive oil, liquid fractions of palm oil or a mixture of two or more of these oils.

## Patentansprüche

1. Cookie-Speiseeis, umfassend eine Speiseeiszubereitung, die mindestens teilweise mit einer Oberschicht bedeckt ist, **dadurch gekennzeichnet, dass** die Oberschicht durch Folgendes erhalten wird:
a) Trockenmahlen einer Menge von Cookies, die bezogen auf das Gewicht der Cookies einen Wassergehalt von unter 5 Gew.-%, vorzugsweise weniger als 3 Gew.-%, mehr bevorzugt weniger als 1 Gew.-% aufweist,
b) Mischen der gemahlenen Cookies mit einer Menge mindestens eines Fettes bei einer Temperatur von 40 bis 75 °C zur Bildung einer fettbasierten Suspension, wobei ferner, falls gewünscht, eine Menge zusätzlicher Bestandteile hinzugefügt werden kann,
c) ferner Verfeinern der Teilchengröße der festen Teilchen, bis mindestens 80 Gew.-% der Teilchen eine durchschnittliche Teilchengröße von kleiner als 30 µm aufweisen und mindestens 99 Gew.-% der Teilchen eine durchschnittliche Teilchengröße von kleiner als 100 µm aufweisen,
d) Abkühlen der so erhaltenen Suspension,
wobei die erhaltene Oberschicht bei 20 °C einen Festfettgehalt von weniger als 5 Gew.-% aufweist.

2. Cookie-Speiseeis nach Anspruch 1, **dadurch gekennzeichnet, dass** die Oberschicht einen Wassergehalt von maximal 3 Gew.-%, vorzugsweise maximal 1 Gew.-% aufweist.

3. Cookie-Speiseeis nach Anspruch 1 oder 2, **dadurch gekennzeichnet, dass** die Oberschicht 35 bis 70 Gew.-% Fett, vorzugsweise 40 bis 60 Gew.-%, mehr bevorzugt 50 bis 55 Gew.-% Fett umfasst.

4. Cookie-Speiseeis nach einem der Ansprüche 1 bis 3, **dadurch gekennzeichnet, dass** das Fett ein flüssiges Öl ist, das ausgewählt ist aus der Gruppe von Palmöl, Rapsöl, Getreideöl, Sojabohnenöl, Maisöl, Sonnenblumenöl, Baumwollsaatöl, Safloröl, Sesamöl, Nussöl, Olivenöl, flüssigen Fraktionen von Palmöl oder einer Mischung von zwei oder mehreren dieser Öle.

5. Cookie-Speiseeis nach einem der Ansprüche 1 bis 4, **dadurch gekennzeichnet, dass** die Oberschicht bei 20 °C einen Festfettgehalt von mehr als 0,5 Gew.-%, vorzugsweise zwischen 1 und 3 Gew.-% aufweist.

6. Cookie-Speiseeis nach einem der Ansprüche 1 bis 5, **dadurch gekennzeichnet, dass** die Oberschicht mindestens 25 Gew.-%, vorzugsweise mindestens 30 Gew.-%, mehr bevorzugt mindestens 40 Gew.-%, am meisten bevorzugt mindestens 50 Gew.-% Cookies umfasst.

7. Cookie-Speiseeis nach einem der Ansprüche 1 bis 6, **dadurch gekennzeichnet, dass** die Speiseeiszubereitung ferner eine Menge zerkleinerter Cookies umfasst.

8. Cookie-Speiseeis nach Anspruch 7, **dadurch gekennzeichnet, dass** die Menge zerkleinerter Cookies in der Speiseeiszubereitung in Bezug auf das Gewicht der Speiseeiszubereitung 1 bis 25 Gew.-%, vorzugsweise 2 bis 15 Gew.-% beträgt.

9. Cookie-Speiseeis nach einem der Ansprüche 7 oder 8, **dadurch gekennzeichnet, dass** die Speiseeiszubereitung ferner 2 bis 20 Gew.-%, vorzugsweise 2 bis 10 Gew.-% Cookiestücke umfasst, die mit mindestens einer Schicht einer fettbasierten Beschichtung beschichtet sind.

10. Cookie-Speiseeis nach Anspruch 9, **dadurch gekennzeichnet, dass** die Beschichtung in Bezug auf das Gewicht der Beschichtung ferner 40 bis 60 Gew.-% festen Zucker umfasst.

11. Cookie-Speiseeis nach Anspruch 10, **dadurch gekennzeichnet, dass** die Beschichtung 40 bis 60 Gew.-% gehärtete Laurinsäure, vorzugsweise gehärtetes Palmkernöl umfasst.

12. Verfahren zur Herstellung des Cookie-Speiseeises nach einem der Ansprüche 1 bis 11, wobei die Speiseeiszusammensetzung mindestens teilweise mit der Oberschicht bedeckt wird.

13. Verfahren nach Anspruch 12, wobei die Oberschicht durch Folgendes erhalten wird
a) Trockenmahlen einer Menge von Cookies, die bezogen auf das Gewicht der Cookies einen Wassergehalt von unter 5 Gew.-%, vorzugsweise weniger als 3 Gew.-%, mehr bevorzugt weniger als 1 Gew.-% aufweist,
b) Mischen der gemahlenen Cookies mit einer Menge mindestens eines Fettes bei einer Temperatur von 40 bis 75 °C zur Bildung einer fettbasierten Suspension, wobei ferner, falls gewünscht, eine Menge zusätzlicher Bestandteile hinzugefügt werden kann,
c) weiteres Verfeinern der Teilchengröße der festen Teilchen, bis mindestens 80 Gew.-% der Teilchen eine durchschnittliche Teilchengröße von kleiner als 30 µm aufweisen und mindestens 99 Gew.-% der Teilchen eine durchschnittliche Teilchengröße von kleiner als 100 µm aufweisen,
d) Abkühlen der so erhaltenen Suspension,
wobei die erhaltene Oberschicht bei 20 °C einen Festfettgehalt von weniger als 5 Gew.-% aufweist.

14. Oberschicht, die durch Folgendes erhalten wird:
a) Trockenmahlen einer Menge von Cookies, die bezogen auf das Gewicht der Cookies einen Wassergehalt von unter 5 Gew.-%, vorzugsweise weniger als 3 Gew.-%, mehr bevorzugt weniger als 1 Gew.-% aufweist,
b) Mischen der gemahlenen Cookies mit einer Menge mindestens eines Fettes bei einer Temperatur von 40 bis 75 °C zur Bildung einer fettbasierten Suspension, wobei ferner, falls gewünscht, eine Menge zusätzlicher Bestandteile hinzugefügt werden kann,
c) weiteres Verfeinern der Teilchengröße der festen Teilchen, bis mindestens 80 Gew.-% der Teilchen eine durchschnittliche Teilchengröße von kleiner als 30 µm aufweisen und mindestens 99 Gew.-% der Teilchen eine durchschnittliche Teilchengröße von kleiner als 100 µm aufweisen,
d) Abkühlen der so erhaltenen Suspension,
wobei die erhaltene Oberschicht bei 20 °C einen Festfettgehalt von weniger als 3 Gew.-% aufweist.

15. Oberschicht nach Anspruch 14, **dadurch gekennzeichnet, dass** das Fett ein flüssiges Öl ist, das ausgewählt ist aus der Gruppe, bestehend aus Palmöl, Rapsöl, Getreideöl, Sojabohnenöl, Maisöl, Sonnenblumenöl, Baumwollsaatöl, Safloröl, Sesamöl, Nussöl, Olivenöl, flüssigen Fraktionen von Palmöl oder einer Mischung von zwei oder mehreren dieser Öle.

## Revendications

1. Crème glacée à base de biscuits comprenant une préparation de crème glacée qui est au moins en partie couverte d'une garniture, **caractérisée en ce que** la garniture est obtenue par :
a) broyage à sec d'une quantité de biscuits ayant une teneur en eau inférieure à 5 % en poids, par rapport au poids des biscuits, de préférence inférieure à 3 % en poids, mieux encore inférieure à 1 % en poids,
b) mélange des biscuits broyés avec une quantité d'au moins une graisse, à une température de 40 - 75° C pour la formation d'une suspension à base de graisse, une quantité d'ingrédients additionnels pouvant en outre être ajoutée, si on le désire,
c) affinage ultérieur de la taille des particules solides jusqu'à ce qu'au moins 80 % en poids des particules aient une taille moyenne de particule inférieure à 30 µm, et au moins 99 % en poids des particules aient une taille moyenne de particule inférieure à 100 µm,
d) refroidissement de la suspension ainsi obtenue,
la garniture obtenue ayant une teneur en graisse solide à 20° C de moins de 5 % en poids.

2. Crème glacée à base de biscuits selon la revendication 1, **caractérisée en ce que** la garniture a une teneur en eau d'au maximum 3 % en poids, de préférence d'au maximum 1 % en poids.

3. Crème glacée à base de biscuits selon la revendication 1 ou 2, **caractérisée en ce que** la garniture comprend 35 - 70 % en poids de graisse, de préférence 40 - 60 % en poids, mieux encore 50 - 55 % en poids.

4. Crème glacée à base de biscuits selon l'une quelconque des revendications 1 - 3, **caractérisée en ce que** la graisse est une huile liquide sélectionnée dans le groupe consistant en huile de palme, huile de graines de colza, huile de blé, huile de soja, huile de maïs, huile de tournesol, huile de graines de coton, huile de carthame, huile de sésame, huile de noix, huile d'olive, fractions liquides d'huile de palme ou un mélange de deux ou de plus que deux de ces huiles.

5. Crème glacée à base de biscuits selon l'une quelconque des revendications 1 - 4, **caractérisée en ce que** la garniture a une teneur en graisse solide à 20° C de plus de 0,5 % en poids, de préférence entre 1 et 3 % en poids.

6. Crème glacée à base de biscuits selon l'une quelconque des revendications 1 - 5, **caractérisée en ce que** la garniture comprend au moins 25 % en poids de biscuits, de préférence au moins 30 % en poids, mieux encore au moins 40 % en poids, idéalement au moins 50 % en poids.

7. Crème glacée à base de biscuits selon l'une quelconque des revendications 1 - 6, **caractérisée en ce que** la préparation de crème glacée comprend en outre une quantité de biscuits écrasés.

8. Crème glacée à base de biscuits selon la revendication 7, **caractérisée en ce que** la quantité de biscuits écrasés dans la préparation de crème glacée est de 1 - 25 % en poids, par rapport au poids de la préparation de crème glacée, de préférence de 2 - 15 % en poids.

9. Crème glacée à base de biscuits selon l'une quelconque des revendications 7 ou 8, **caractérisée en ce que** la préparation de crème glacée comprend en outre 2 - 20 % en poids de morceaux de biscuits enrobés d'au moins une couche d'enrobage à base de graisse, de préférence 2 - 10 % en poids.

10. Crème glacée à base de biscuits selon la revendication 9, **caractérisée en ce que** l'enrobage comprend en outre 40 - 60 % en poids de sucre solide par rapport au poids de l'enrobage.

11. Crème glacée à base de biscuits selon la revendication 10, **caractérisée en ce que** l'enrobage comprend 40 - 60 % en poids d'acide laurique hydrogéné, de préférence de l'huile de palmiste hydrogénée.

12. Procédé de préparation de la crème glacée à base de biscuits selon l'une quelconque des revendications 1 - 11, dans lequel la composition de crème glacée est au moins en partie couverte de la garniture.

13. Procédé selon la revendication 12, dans lequel la garniture est obtenue par :
a) broyage à sec d'une quantité de biscuits ayant une teneur en eau inférieure à 5 % en poids, par rapport au poids des biscuits, de préférence inférieure à 3 % en poids, mieux encore inférieure à 1 % en poids,
b) mélange des biscuits broyés avec une quantité d'au moins une graisse, à une température de 40 - 75° C pour la formation d'une suspension à base de graisse, une quantité d'ingrédients additionnels pouvant en outre être ajoutée, si on le désire,
c) affinage ultérieur de la taille des particules solides jusqu'à ce qu'au moins 80 % en poids des particules aient une taille moyenne de particule inférieure à 30 µm, et au moins 99 % en poids des particules aient une taille moyenne de particule inférieure à 100 µm,
d) refroidissement de la suspension ainsi obtenue,
la garniture obtenue ayant une teneur en graisse solide à 20° C de moins de 5 % en poids.

14. Garniture qui est obtenue par :
a) broyage à sec d'une quantité de biscuits ayant une teneur en eau inférieure à 5 % en poids, par rapport au poids des biscuits, de préférence inférieure à 3 % en poids, mieux encore inférieure à 1 % en poids,
b) mélange des biscuits broyés avec une quantité d'au moins une graisse, à une température de 40 - 75° C pour la formation d'une suspension à base de graisse, une quantité d'ingrédients additionnels pouvant en outre être ajoutée, si on le désire,
c) affinage ultérieur de la taille des particules solides jusqu'à ce qu'au moins 80 % en poids des particules aient une taille moyenne de particule inférieure à 30 µm, et au moins 99 % en poids des particules aient une taille moyenne de particule inférieure à 100 µm,
d) refroidissement de la suspension ainsi obtenue,
la garniture obtenue ayant une teneur en graisse solide à 20° C de moins de 3 % en poids.

15. Garniture selon la revendication 14, **caractérisée en ce que** la graisse est une huile liquide sélectionnée dans le groupe consistant en huile de palme, huile de graines de colza, huile de blé, huile de soja, huile de maïs, huile de tournesol, huile de graines de coton, huile de carthame, huile de sésame, huile de noix, huile d'olive, fractions liquides d'huile de palme ou un mélange de deux ou de plus que deux de ces huiles.
